# EUROPEAN PATENT SPECIFICATION

(11) **EP 3 284 624 B1**
(45) Date of publication and mention of the grant of the patent: **09.10.2019**
(21) Application number: 17186445.7
(22) Date of filing: 16.08.2017
(51) Int. Cl.: B60J 5/06

(54) **SUPPORT BEAM**
TRAGHOLM
POUTRE PORTEUSE

(30) Priority: 16.08.2016 BE 201605639
(43) Date of publication of application: 21.02.2018
(73) Proprietor: Versus Invest BVBA, 3660 Opglabbeek (BE)
(72) Inventor: ROGIERS, Erik Ronny Felix, 3850 Kozen (BE)
(74) Representative: Philippaerts, Yannick

(56) References cited:
- EP-A1- 2 837 549
- EP-A2- 2 540 598
- DE-A1-102012 006 400

## Description

The invention relates to a system for suspending a tarpaulin for the purpose of closing a side of a loading space. Such suspension systems typically comprise a support beam provided with rails in which wheels of carriages can roll. The tarpaulin is suspended from these carriages.

Loading spaces enclosed by load containers, in particular mobile load containers situated on trucks and/or trains, must comply with predetermined maximum outer dimensions. These outer dimensions are often imposed by law. The loading space, which is the space effectively available inside the load container, is limited by these prescribed maximum dimensions. Sides of such loading spaces are often closed off with a tarpaulin which can be slid open in order to thus provide access to the loading space via the respective side. In order to obtain maximum loading space the tarpaulin is attached to an outermost peripheral edge of the load container.

The tarpaulin is typically suspended directly or indirectly from carriages which can roll over tracks in rails present in a support beam. The carriages bear the tarpaulin and are themselves supported by the support beam. The carriages allow sliding open of the tarpaulin by rolling the carriages over the rails to one end of the support beam in the longitudinal direction of the support beam. When the tarpaulin is opened the wheels roll over the tracks in the rails, whereby the resistance to opening of the tarpaulin is minimized. The known suspension system for tarpaulins are preferably optimized here in order to prevent the possibility of the carriages jamming when the tarpaulin is slid open. Wheels could jam particularly when an operator attempts to slide the tarpaulin open too quickly or too roughly.

When a container with a closing tarpaulin has to be loaded or unloaded in a logistics environment, the time pressure is often very considerable, whereby these closing tarpaulins are substantially always opened quickly and roughly. Another example is when a truck, provided with a loading space with a side wall closed by a tarpaulin, wholly or partially blocks a street in order to make a delivery to or pick something up from a shop, for instance in a city centre, and the tarpaulin will also be substantially always opened quickly and roughly.

EP 2 708 395 describes a system for attaching a tarpaulin for the purpose of closing a side, wherein the carriages are formed with a plurality of sets of wheels which are oriented relative to each other and relative to the support beam of the system such that the tarpaulin can be opened and closed in a reliable manner and without the system jamming. Even in situations where the tarpaulin is opened or closed quickly and/or roughly the wheels will move in a correct manner relative to the support beams. EP 2 708 395 also explicitly describes an embodiment wherein the system for closing a side of a loading space is provided with a lower support beam and with an upper support beam, and wherein upright supporting beams extend between the lower and the upper support beam and are connected there via respectively lower carriages and upper carriages. The tarpaulin is connected here to the upright supporting beams. An advantage of such a configuration is that the tarpaulin is guided by carriages at the top of the side as well as at the bottom of the side and is also connected to the loading space via these carriages.

A further advantage relates to the securing of cargo. In the closed state the upright supporting beams form together with the lower and the upper support beams a framework which can absorb high lateral forces without the tarpaulin even being loaded such that a cargo can be held in the loading space. The upright supporting beams can further function as connection posts to which goods can be connected in the loading space so that their position is fixed.

It is noted in this context that systems exist wherein the tarpaulin is connected only via an upper support beam and wherein an underside of the tarpaulin is connected via attaching means, such as buckles, to a lower support beam when the side wall is closed. In order to open a tarpaulin with the latter configuration the buckles are first unfastened such that the bottom part of the tarpaulin is no longer connected to the loading space, after which the tarpaulin can then be slid open.

EP2540598 discloses a system for connecting a tarpaulin, wherein the supporting beams are extendable such that the upper support beam can be lifted.

The present invention relates particularly to a system for attaching a tarpaulin for the purpose of closing a side of a loading space with an upper support beam and a lower support beam, wherein upright supporting beams extend between the lower and the upper support beams and are connected via respective carriages to the support beams, and wherein the tarpaulin is connectable to the upright supporting beams.

It is an object of the invention to provide a supporting beam which is optimized for extending between a lower and an upper support beam.

The invention provides for this purpose a supporting beam for a system for attaching a tarpaulin for the purpose of closing a side of a loading space, which supporting beam is provided to extend in the system between an upper support beam and a lower support beam, and wherein the supporting beam comprises on an upper side an upper carriage which is compatible with an upper rail of the upper support beam, and comprises on an underside a lower carriage which is compatible with a lower rail of the lower support beam, wherein the supporting beam is provided to hold the lower carriage at a first predetermined minimum distance relative to the upper carriage in a first mode of use, this minimum distance being related to the height of the loading space, characterized in that the supporting beam has a second mode of use for holding the lower carriage at a second predetermined minimum distance relative to the upper carriage, wherein the second predetermined minimum distance is greater than the first predetermined minimum distance.

The supporting beam according to the invention has an upper carriage at the top and has a lower carriage at the bottom, and is thereby provided to extend between a lower support beam and an upper support beam. The supporting beam according to the invention is thereby optimized for a system for attaching a tarpaulin for the purpose of closing a side of a loading space with an upper support beam and a lower support beam. The tarpaulin is then typically connected to the loading space via the two support beams.

The supporting beam according to the invention has a first mode of use, in which the lower carriage is held at a first predetermined minimum distance relative to the upper carriage. Providing a minimum distance between the lower and the upper carriage enables the upper support beam to rest on the lower support beam via the supporting beam. It will be apparent here that the roof of the loading space is typically connected to the upper support beam, whereby carrying or supporting the upper support beam implies that the roof is also being carried and/or supported. In an embodiment of a side of a loading space wherein the side comprises a lower and an upper support beam, a plurality of supporting beams are preferably provided, preferably at a regular mutual distance, which distance can for instance lie between 120 cm and 50 cm. Providing the supporting beam with a minimum distance between the lower and the upper carriage enables the roof to be supported by the plurality of supporting beams, whereby the weight of the roof is distributed over the different supporting beams. Distributing the weight of the roof over a plurality of supporting beams has been found to be particularly advantageous when the weight of the roof increases due to rain or snow. Because the supporting beam only determines a minimum distance between the lower and the upper carriage, a reliable operation of the system for closing the side of the loading space can be guaranteed.

For a good operation of the system for closing a side of loading space, the dynamic use of such a system is preferably taken into consideration. Loading spaces, particularly mobile loading spaces, are subject to movements and/or external forces which result in at least partial deformation of the form of the loading space. A simple example hereof is a truck which drives with one of its rear wheels over a raised kerb, whereby the loading space undergoes a torsional movement. Tests have shown that the system operates optimally when the supporting beams allow the distance between the lower and the upper carriage to vary. By providing a minimum distance this variation is preferably allowed at least partially, wherein the minimum distance is the distance at which the upper support beam is supported by the supporting beam.

In the invention the supporting beam has a second mode of use, wherein the lower carriage is held at a second predetermined minimum distance relative to the upper carriage and wherein the second minimum distance is greater than the first minimum distance. The two modes of use allow the upper support beam to be supported at two different heights relative to the lower support beam. This has several advantages. A first advantage is that a loading space can be provided with a lifting roof, which allows the roof to be raised upward in order to facilitate loading and unloading, and wherein the supporting beams can be set to the first or the second mode of use in order to determine the travel height of the roof. This allows driving in a low position, wherein the supporting beams are placed in a first mode of use so that the roof is supported by the supporting beams at the first predetermined minimum distance relative to the lower support beam. With the supporting beams according to the invention it is also possible to drive in a so-called elevated position, wherein the supporting beams are placed in their second mode of use so that the roof is supported at a height situated higher relative to the lower support beam than in the low position. The loading space can hereby be optimized depending on circumstances and/or regulations. The invention thereby allows the loading space to be used in two modes of use.

A further advantage is that production of mobile loading spaces becomes cheaper. Mobile loading spaces are typically provided with an undercarriage with wheels. This undercarriage has a height. Depending on the height of the undercarriage, the mobile loading space can be constructed to greater or lesser height. By providing supporting beams with multiple modes of use it is possible to select a mode of use subject to the chosen undercarriage in order to manufacture a loading space with maximum height, taking into consideration the permissible maximum height for the combination of undercarriage and loading space. One type of supporting beam having the modes of use can be used here in several different situations for forming a loading space with different heights. This reduces the number of different components which must be in stock in order to enable construction of the different loading spaces. This further reduces the logistical burdens in the manufacture of loading spaces.

The supporting beam comprises a guide housing on an upper side and the upper carriage is connected to a guide which is compatible with the guide housing, so that the upper carriage is movable in a longitudinal direction of the supporting beam in the first mode of use and in the second mode of use of the supporting beam in order to increase the distance between the lower and the upper carriage. The guide can move in the guide housing in a longitudinal direction of the supporting beam. The upper carriage is connected to the guide so that the upper carriage can be moved upward and downward in the longitudinal direction relative to the supporting beam. The guide and the guide housing hold the upper carriage fixedly in line with the supporting beam, while the upper carriage is still movable in the longitudinal direction of the supporting beam. In the first mode of use and in the second mode of use the supporting beam defines here respectively a first predetermined minimum distance and a second predetermined minimum distance between the lower carriage and the upper carriage. The guide and the guide housing allow the upper carriage to increase the distance between the lower and the upper carriage from this minimum distance in each of these modes of use. This enables the dynamic use of the system, as described above with an example. This also allows the roof to be raised upward, this increasing the distance between upper support beam and lower support beam.

The supporting beam is preferably provided with a stop for the upper carriage, wherein the position of the stop relative to the supporting beam determines the minimum distance between the lower and the upper carriage in the first and in the second mode of use of the supporting beam. Because the upper carriage is movable relative to the supporting beam via the guide and the guide housing, the minimum distance can be set in simple manner by providing a stop. The stop prevents the upper carriage being able to move closer to the lower carriage than the minimum distance. In the second mode of use the stop can be placed at a different position relative to the lower carriage in order to define a different mutual distance between the lower and upper carriage.

The supporting beam preferably comprises a base body and an accessory, which accessory is compatible with the base body for being connected at at least two positions to the base body so that the mode of use of the supporting beam is determined by the position of the accessory. Constructing the supporting beam by means of a base body and an accessory allows the two modes of use of the supporting beam to be embodied in extremely simple manner. The base body and accessory are preferably adjusted to each other in order to allow simple connection of the accessory to the base body at two different positions. For a user, this facilitates selection of a mode of use of the supporting beam. This also facilitates a user in switching the supporting beam from the first to the second mode of use or vice versa.

The accessory and the base body preferably comprise connecting means which are compatible in order to connect the accessory to the base body in a manner such that the connection allows a predetermined displacement of the accessory relative to the base body to be performed. In a preferred embodiment the connecting means are formed by one or more protrusions and corresponding slots, wherein the protrusions engage in the slots in order to realize the connection while the protrusions are movable inside the slots so that the predetermined displacement can be performed. The accessory is connected to the base body via the protrusions and corresponding slots. The protrusions can move in the slots in order to realize the displacement of the accessory so that the length of the supporting beam can be adjusted between the first and the second mode of use. This construction is easily realized, inexpensive and reliable. A supporting beam is hereby obtained wherein base body and accessory form one whole because of the connection, and still have two modes of use.

The slots preferably extend in a direction substantially equal to the longitudinal direction of the supporting beam so that the accessory is displaceable relative to the base body in the longitudinal direction of the supporting beam. The length of the supporting beam is thereby adjustable so that the supporting beam can be brought into its first and into its second mode of use.

The accessory and the base body preferably comprise locking means which are compatible with each other for the purpose of locking the accessory relative to the base body at two different positions of the accessory relative to the base body. In a preferred embodiment the locking means are formed by one or more pins and two sets of corresponding openings, wherein the pins are provided to engage in the corresponding openings of each of the two sets so as to lock the accessory relative to the base body in each of the two respective positions. The corresponding openings are preferably formed with an opening to an edge of the accessory, such that the pins can be placed into the opening via the edge. This has the further advantage that the locking means can be used without additional tools. Placing the pins into the openings locks the accessory relative to the base body, which fixes the position of the accessory relative to the base body. Because the accessory can be locked relative to the base body without tools, a user can easily switch between a first mode of use and a second mode of use of the supporting beam, depending on the circumstances.

The accessory is preferably provided with the stop. The stop determines the minimum distance between the lower carriage and the upper carriage. By providing the accessory with the stop the position of the accessory relative to the base body will determine the minimum distance between the lower and the upper carriage. The supporting beam can hereby be brought into its first or second mode of use.

The base body is preferably provided with the guide housing. The guide housing is compatible with the guide, which carries the upper carriage, so that the upper carriage is movable relative to the guide housing via the guide. By providing the guide housing in the base body the upper carriage can move relative to the base body. This has the result that the accessory is only functional and loaded when the upper carriage supports against the stop. When the upper support beam is placed at a distance greater than the minimum distance relative to the lower support beam, for instance by raising of the roof, the accessory can be freely manipulated. This further simplifies the use and the possible applications of the supporting beam according to the invention.

The accessory preferably extends at the position of an upper segment of the supporting beam, this upper segment forming at least ten percent, preferably at least fifteen percent, more preferably at least twenty percent of the length of the supporting beam in the first mode of use. Giving the accessory a minimum length facilitates displacement of the accessory on the supporting beam between its first and its second mode of use. This is because it becomes easier for a user to reach the accessory and to manipulate the accessory.

The invention further relates to a system for attaching a tarpaulin for the purpose of closing a side of a loading space, wherein the system comprises an upper support beam and a lower support beam and at least two supporting beams, preferably at least four supporting beams according to the invention, wherein each of the supporting beams extends between the upper and lower support beam.

The invention further relates to a loading space with a side which can be closed via a tarpaulin which is attached by means of a system according to the invention.

The invention will now be further described on the basis of an exemplary embodiment shown in the drawing.

In the drawing:
figure 1 shows an example of a loading space in which the invention can be applied;
figure 2 shows a supporting beam according to an embodiment of the invention;
figure 3 shows an exploded view of a supporting beam according to figure 2; and
figure 4 shows a further embodiment of the invention.

The same or similar elements are designated in the drawing with the same reference numerals.

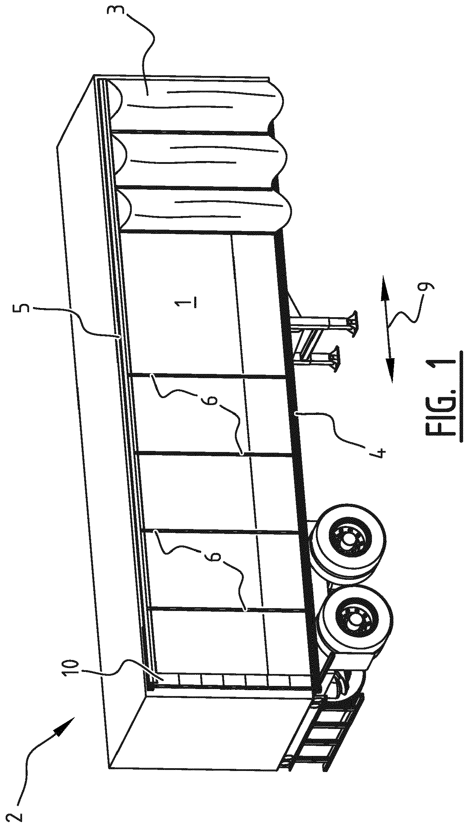

The invention relates to a system for suspending a tarpaulin for the purpose of closing a side of a loading space. Loading space 1 is preferably defined here by a load container 2, in particular a mobile load container. The mobile load container is shown in figure 1 as a trailer of a truck. Such mobile load containers 2 are typically used to transport goods. It will be apparent that the invention is not only applicable to trailers of trucks, but also to railway wagons, trucks with fixedly constructed load container and further mobile load containers with loading spaces for transporting goods.

Such load containers typically have dimensions which are limited by law. In Belgium for instance an outer dimension with a maximum width of 2.55 m is thus imposed for a non-refrigerated load container of a truck. These imposed maximum outer dimensions affect the maximum loading space in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside the wall. The outer dimensions are in this way defined substantially by the wall of the loading space, this maximizing the room available in the loading space. The maximum height of the trailer is also determined by law. The height of the trailer is determined by the combination of the height of the chassis with the wheels and the suspension and the height of the load container constructed on the chassis. This has the result that a larger load container can be constructed on a smaller chassis.

The wall is preferably formed by a tarpaulin 3. A tarpaulin 3 typically has a small thickness and will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated in figure 1, wherein tarpaulin 3 has been pushed partially to a right-hand side of the trailer.

Figure 1 shows a trailer wherein tarpaulin 3 is suspended via a suspension system with carriages and support beams, wherein the support beams are located on the underside as well as on the upper side. Figure 1 shows on the left-hand side of the trailer the suspension system without tarpaulin, and in addition the figure shows a part of the suspension system with tarpaulin 3. In figure 1 the upper support beam is designated with reference numeral 5 and the lower support beam is designated with reference numeral 4. Upright supporting beams 6 extend between the lower and upper support beams 4, 5. These upright supporting beams 6 comprise on their underside respective lower carriages 7 which are compatible with lower support beam 4. On the upper side the upright supporting beams 6 comprise upper carriages 8 which are compatible with the upper support beam. The tarpaulin is then connected to upright supporting beams 6 such that the side wall of the loading space can be closed off with the tarpaulin.

Making use of an upper support beam 5 and a lower support beam 4 has the advantage that the tarpaulin is held fixedly both at the top and bottom both in the closed position and the open position as well as during opening and closing, and so cannot move away from the loading space. This is particularly important in the case of trucks which are used in urban areas for loading and unloading goods. If such a truck were to have only an upper support beam, and the tarpaulin hangs downward from this upper support beam without being held fixedly at the bottom, the tarpaulin could move away from the loading space at the bottom and thereby damage surrounding objects such as cars and buildings, or injure people. This is prevented in the system of the invention by attaching the tarpaulin not only to an upper support beam 5, but also to a lower support beam 4. The system according to the invention is further found to be considerably less labour-intensive during opening and closing than similar systems without lower support beam. Without lower support beam, the tarpaulin will have to be manually attached and detached at the bottom at regular positions during respectively closing and opening, which is very time-consuming.

Lower support beam 4 is provided with rails and lower carriages 7 are provided with wheels which are compatible with these rails such that lower carriages 7 can travel in the rails in a longitudinal direction 9 of support beam 4. Upper support beam 5 likewise comprises rails and upper carriages 8 comprise wheels which are compatible with these rails such that upper carriages 8 can also travel in the rails in a longitudinal direction 9 of upper support beam 5. Because upright supporting beams 6 extend between lower carriages 7 and upper carriages 8, upright supporting beams 6 can move in the longitudinal direction 9, this usually being substantially perpendicularly of the longitudinal direction of supporting beams 6. By moving upright supporting beams 6 in the direction of one end of the side wall of loading space 1 the tarpaulin 3 can be slid open in order to provide access to loading space 1. As the skilled person will appreciate, tarpaulin 3 can also be closed in the same manner.

Further elements, such as a door 10, can extend between upper support beam 5 and lower support beam 4. In the context of the system for attaching a tarpaulin 3 for closing the side of a loading space 1 a door 10 is defined as an upright supporting beam 6 which, in addition to holding the tarpaulin, has an additional functionality. Door 10 of figure 1 has the further function of attaching the tarpaulin on a side to an upright edge of loading space 1. Such a door is described in BE 2012/0619. A similar door 10 can be provided in the middle of the side wall in order to impart extra sturdiness to the system.

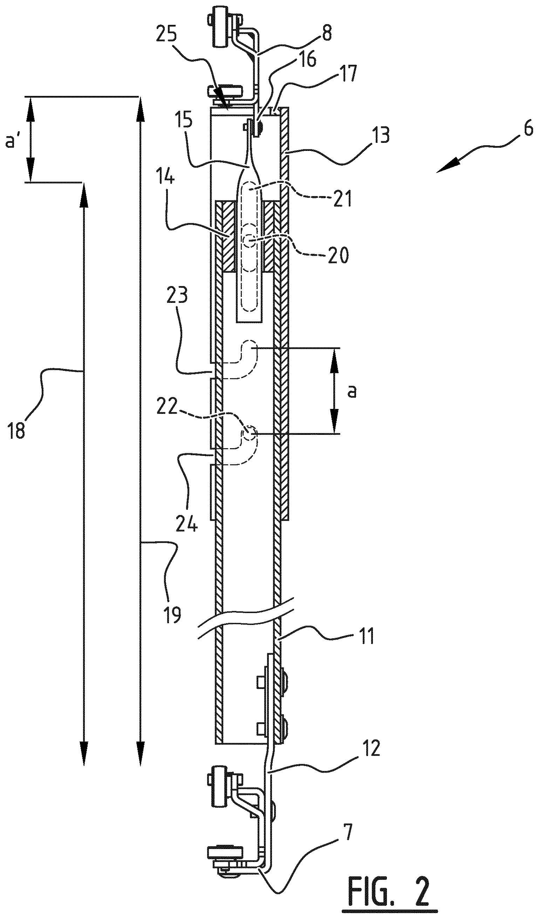

Figure 2 shows a supporting beam 6 according to an embodiment of the invention. The figure shows how a carriage 8 is provided for rolling in the upper support beam and how a carriage 7 is provided for rolling in the lower support beam. Supporting beam 6 is further constructed from a base body 11 and an accessory 13.

The lower carriage is connected to the base body 11 of supporting beam 6, for instance via a frame 12 of the lower carriage. In the shown embodiment this frame 12 is connected via connecting means such as screws, nails or rivets to base body 11. In similar manner a downward extending frame 16 of upper carriage 8 is connected to a guide or rail 15. The guide or rail is movably connected to a guide housing 14 which is connected to or forms part of base body 11. This construction allows upper carriage 8 to move over a predetermined distance relative to lower carriage 7, in the longitudinal direction of supporting beam 6. The predetermined distance depends on the length of the guide or rail 15. It will be apparent to the skilled person that the shown connection via a guide 15 and guide housing 14 is only one embodiment, and that other connecting mechanisms where a degree of freedom of movement is available are likewise possible.

Because of this construction the supporting beam 6 has a freedom of movement for the purpose of varying a distance between upper wheel 8 and lower wheel 7. This is particularly suitable for countering torsional forces on the truck. The truck can also be provided with a lifting roof, wherein the roof can be raised several tens of centimetres upward in order to facilitate loading and unloading. A connection as shown in figure 2 can follow such a movement of the roof by allowing lower carriage 7 and upper carriage 8 to slide outward relative to each other, or slide inward when the roof is lowered.

The tarpaulin 3 for closing the loading space can be attached to the upper carriage 8 at the position of frame 16. The weight of tarpaulin 3 is hereby suspended from the upper support beam 5. Alternatively and preferably, the tarpaulin can be attached at least for the greater part to base body 11 of supporting beam 6. Base body 11 then preferably extends to a position close to an upper zone of supporting beam 6. The advantage of attaching the tarpaulin to base body 11 of the supporting beam is that the weight of the tarpaulin is then supported by lower carriages 6 which are mounted directly on the chassis of the truck via the lower support beam. This lowers the centre of gravity of the truck, and the superstructure of the loading space can be manufactured in lighter form.

According to a traditional construction of a loading space 1 with upper and lower support beams, as illustrated in figure 1, the outer support beams 5 and, with this, also the roof of loading space 1 are supported on the front side and the rear side of loading space 1. Upper support beam 5 is thereby supported only at its beginning and end. Support beam 5 therefore has to be manufactured in strong form in order to support bending as a result of its own weight, rain, snow and/or the weight of the system for suspending a tarpaulin. Supporting beams 6 traditionally do not provide any upward support for the roof or for the upper support beam 5. Supporting beams 6 function as support for tarpaulin 3 in order to facilitate the folding of tarpaulin 3 from an open to a closed state and vice versa. The supporting beams further function to improve the securing of cargo. This is because the upright supporting beams 6 provide resistance to a force which will be applied transversely of the tarpaulin, whereby a cargo in loading space 1 is not likely to, or at least is less likely to fall out of the loading space.

According to the invention, supporting beam 6 acquires a further function, in this case supporting of support beam 5. This is further elucidated with reference to figure 2. Figure 2 shows an upright supporting beam 6 having a lower carriage 7 at the bottom and an upper carriage 8 at the top. Lower carriage 7 is formed to be compatible with lower support beam 4. Lower support beam 4 preferably has a rail in which the wheels of lower carriage 7 can roll, such that lower carriage 7 can move in the longitudinal direction 9 relative to lower support beam 4 without appreciable resistance, while movements in other directions, for instance upward or downward or transversely of loading space 1, are prevented. Carriage 7 is more preferably formed so that rotations of the carriage in multiple, preferably almost all, rotation directions of carriage 7 relative to lower support beam 4 are prevented. Lower carriage 7 is thus optimized to allow supporting beam 6 to move relative to lower support beam 4 in the longitudinal direction 9 for the purpose of opening and closing tarpaulin 3.

Supporting beam 6 preferably has an upper carriage 8 at the top, which is compatible with upper support beam 5 in a similar manner as described above with reference to lower carriage 7 and lower support beam 4. Upper carriage 8 is hereby optimized to allow upright supporting beam 6 to move in the longitudinal direction 9 for the purpose of opening and closing tarpaulin 3. When lower carriage 7 engages in lower support beam 4 and upper carriage 8 engages in upper support beam 5, a distance 18, 19 between lower carriage 7 and upper carriage 8 corresponds to the distance between lower support beam 4 and upper support beam 5. The distance between lower support beam 4 and upper support beam 5 substantially determines the height of loading space 1. In situations where the loading space is provided with a lifting roof this height can be increased by raising the roof upward. In situations where the trailer is driven with one of the rear wheels onto a raised kerb, or in similar situations, the height between lower support beam and upper support beam can change locally due to deformation of the loading space. These phenomena are referred to in the further description as the dynamic use of the loading space.

The supporting beam 6 according to the invention is optimized to support the upper support beam 5. This means that the upper carriage 8 cannot simply move freely relative to the lower carriage 7, since this free movement has the result that supporting beam 6 fulfils no bearing function for upper support beam 5. In order to solve this and still maintain the dynamic use of loading space 1, supporting beam 6 is constructed to define a minimum distance 18, 19 between lower carriage 7 and upper carriage 8.

In the embodiment of figure 2 the minimum distance 19 is realized by providing a stop 17 for upper carriage 8, such that in a movement in the direction of lower carriage 7 upper carriage 8 bumps against stop 17 when the minimum distance 19 has been reached. Support beam 5 can hereby support via upright supporting beam 6 on lower support beam 4. Upper support beam 5 and, by extension, the roof of loading space 1 can thereby be carried by the plurality of supporting beams 6 provided at different positions along the length of the loading space. It will be apparent here that a plurality of supporting beams 6 are provided between upper support beam 5 and lower support beam 4 so that the weight is distributed over the different supporting beams 6. This construction however does not impede the dynamic use of loading space 1, when support beam 5 moves upward several centimetres for whatever reason, supporting beams 6 will allow upper carriage 8 to perform a corresponding movement relative to lower carriage 7. The roof of loading space 1 can hereby still be provided with a lifting mechanism in a conventional manner, and the dynamic use of the loading space can be maintained.

In the embodiment of figure 2 the upright supporting beam 6 is formed by a combination of a base body 11 and an accessory 13. Base body 11 preferably extends here over the greater part of the height of upright supporting beam 6. The greater part is further preferably defined here as at least 70%, more preferably at least 80%, most preferably at least 90% of the distance between the lower and upper support beam when the lower and upper support beam are in rest and are positioned at an optimal distance relative to each other. On an underside the lower carriage 7 is attached to base body 11, for instance via a frame 12 which, for determining the height of supporting beam 6, is deemed part of the supporting beam. On an upper side of upright supporting beam 6 the upper carriage 8 is connected to a guide 15, preferably via a frame 16. This guide 15 is held in a guide housing 14 which is preferably fixedly connected to base body 11 at the position of an upper side of the base body. Guide 15 and guide housing 14 preferably take a compatible form in order to allow a movement of guide 15 relative to guide housing 14 in the longitudinal direction of supporting beam 6.

In the embodiment of figure 2 guide 15 and guide housing 14 take a compatible form, wherein guide 15 is elongate and, as seen in cross-section, has outer dimensions and a form such that guide 15 fits in an opening of guide housing 14 having a similar form and substantially corresponding dimensions. Because of this construction the upper carriage 8 is held movably by base body 11, and the connection of upper carriage 8 to base body 11 is formed independently of accessory 13.

Accessory 13, and particularly the position of accessory 13 relative to base body 11, determines the minimum distance 18, 19 in the embodiment of figure 2. Because stop 17 is formed on accessory 13, the position of accessory 13 will determine when upper carriage 8 bumps against accessory 13 and thus reaches the minimum distance between upper carriage 8 and lower carriage 7. Figure 2 shows accessory 13 in its uppermost position, and therefore shows the minimum distance as distance 19. The second predetermined minimum distance 19 is greater than the first predetermined minimum distance 18. The difference between the first and the second minimum distance 18, 19 is more specifically indicated with a' in figure 2. The difference a' is equal to the difference between two attaching positions, which are determined in the embodiment of figure 2 by an upper opening 23 and a lower opening 24 of accessory 13.

Accessory 13 is preferably fixedly connected to base body 11. Fixedly connected is defined here as connected in a manner such that accessory 13 cannot be removed from base body 11 without tools. It is noted here that fixedly connected does not imply that the position of accessory 13 relative to base body 11 is predetermined. In the embodiment as shown in figure 2 the fixed connection is realized by providing protrusions 20 on base body 11 and providing corresponding slots 21 in accessory 13. Protrusions 20 engage in slots 21 so that accessory 13 is fixedly connected to base body 11. Slots 21 extend in the longitudinal direction of upright supporting beam 6 and protrusions 20 are formed so as to be movable in slots 21. Accessory 13 can hereby be moved relative to base body 11 in the longitudinal direction of the upright supporting beam so as to thus change the length of supporting beam 6.

According to an alternative embodiment (not shown) accessory 13 is fixedly connected to base body 11 via guide 15. In this alternative embodiment accessory 13 comprises an opening at the top through which guide 15 protrudes. Because the upper carriage is connected at the top of guide 15 and the base body is situated at the bottom of the guide, accessory 13 cannot be removed from the guide, nor therefore from the base body. The skilled person will appreciate that other mechanical connections can be provided in order to allow movement of the accessory relative to the base body, while removal is prevented.

Considering the function of the supporting beam in the context of supporting the upper support beam 5, the length of the supporting beam is directly related to the distance between lower carriage 7 and stop 17. This is because this distance between lower carriage 7 and stop 17 determines the height at which support beam 5 is supported relative to lower support beam 4. The length of supporting beam 6 is largely determined by base body 11 and accessory 13, and the variation of the length is directly related to the variation of the position of accessory 13 relative to base body 11.

Base body 11 and accessory 13 further comprise complementary fixing means for fixing accessory 13 at at least two predetermined positions relative to base body 11. When accessory 13 is fixed relative to base body 11, the length of supporting beam 6 is also determined and, with this, the minimum distance between upper carriage 8 and lower carriage 7 is defined. In the embodiment of figure 2 base body 11 has a set of pins 22 and accessory 13 has two corresponding sets of openings, an upper opening 23 and a lower opening 24. Each of the sets of openings 23, 24 corresponds to a position of accessory 13 relative to base body 11. Each of the sets of openings 23, 24 is provided in order to receive the set of pins 22 and thus predetermine the position of accessory 13 relative to base body 11.

As shown, openings 23, 24 are preferably open toward a side of accessory 13 so that pins 22 can be placed into the opening via the side without tools or accessory being necessary for this purpose. This increases the convenience of use of accessory 13. Openings 23 and 24 are preferably formed such that accessory 13 is prevented from moving downward when the pins have been placed into one of the set of openings 23, 24. The sets of openings 23 and 24 are more preferably formed such that a specific predetermined upward movement of the accessory allows the accessory to move such that pins 22 are moved out of openings 23, 24. The distance a between upper openings 23 and lower openings 24 is equal to the distance a' between the first predetermined minimum distance 18 and the second predetermined minimum distance. The skilled person will appreciate that other mechanical fixing means can be provided in order to fix a position of the accessory relative to the base body.

Protrusions 20, slots 21, pins 22 and openings 23 and 24 are positioned and configured such that accessory 13 can be moved between a first position and a second position relative to base body 11 and that accessory 13 can be fixed in each of the first position and the second position relative to base body 11 so as to thereby determine the minimum distance between lower carriage 7 and upper carriage 8.

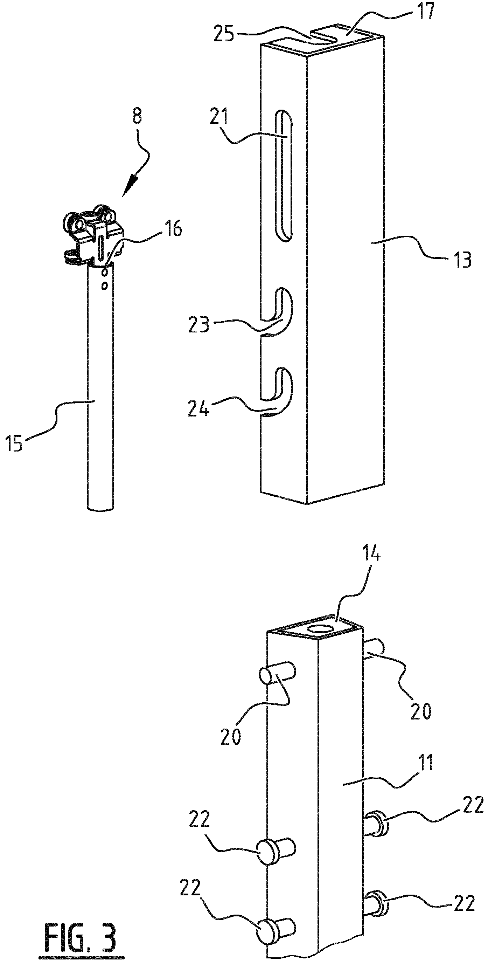

Figure 3 shows an exploded view of a base body 11, accessory 13 and upper carriage 8 with guide 15. Figure 3 makes clear here that upper carriage 8 is directly connected to base body 11 via the operational connection between guide 15 and guide housing 14. Guide housing 14 is fixedly provided in an upper portion of base body 11. Guide 15 extends into guide housing 14 to be guided by guide housing 14 in a longitudinal direction of upright supporting beam 6.

Base body 11, which is described above, comprises a recess 25 for passage of guide 15. This recess 25 is preferably formed such that accessory 13 can be moved from its first position to its second position and back, while guide 15 extends through recess 25. The skilled person will appreciate here that, in order to move pins 22 out of openings 23, 24, accessory 13 will also undergo a limited rotation movement, wherein recess 25 is provided for passage of guide 15 during this rotation. On the basis of the above description the skilled person will be able to dimension accessory 13 relative to base body 11 so as to function as stop 17 for upper carriage 8.

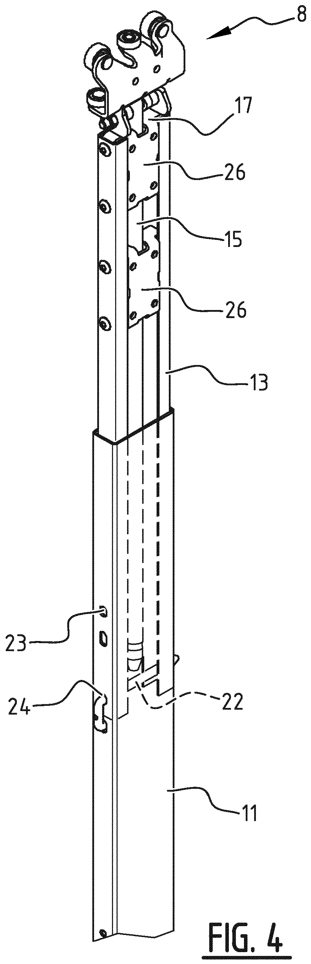

Figure 4 shows a further embodiment of the invention. In figure 4 base body 11 is formed so as to at least partially enclose accessory 13. More specifically, base body 11 is formed as a tube or a hollow profile with an open or a closed form in cross-section. This open profile is a U-profile wherein the ends of the legs of the U are folded inward. In the embodiment of figure 4 accessory 13 is formed by two opposite C-profiles which fit in base body 11. Accessory 13 can slide upward and downward in the longitudinal direction of the base body, at least when pin 22 has been removed, so that the height position of accessory 13 relative to base body 11 can be changed.

The two opposite C-profiles which form accessory 13 are mutually connected by at least two connecting elements 26. These connecting elements 26 comprise a central opening which is provided for receiving guide 15 therein. In the embodiment of figure 4 the connecting elements 26 thereby form guide housing 14 similar to the guide housing 14 shown in figure 2.

In the embodiment of figure 4 the height of accessory 13 relative to base body 11 is determined by the insertion of a pin 22 into base body 11. Pin 22 is placed transversely through base body 11. Pin 22 hereby forms a stop for accessory 13 so that accessory 13 is prevented from sliding down lower than a lowermost position. In order to enable pin 22 to be placed through the base body at different heights, lower openings 24 and upper openings 23 are formed in base body 11. In the embodiment of figure 4 accessory 13 supports on pin 22 in its relative lower position. Accessory 13 can alternatively also be provided with openings so that the pin can be placed through the openings in the accessory and through the openings 23 or 24 in the base body so that the position of accessory 13 relative to base body 11 is fixed. With this, pin 22 forms locking means for locking accessory 13 relative to base body 11.

The first mode of use, in which the lower carriage is held at a first predetermined minimum distance relative to the upper carriage, corresponds to the mode in which pin 22 is placed into lower opening 24. By placing pin 22 in upper opening 23 the supporting beam of this embodiment can further be brought into the second mode of use, in which the lower carriage is held at a second predetermined minimum distance relative to the upper carriage, wherein the second predetermined minimum distance is greater than the first predetermined minimum distance. Accessory 13 is hereby positioned higher relative to base body 11, and the minimum distance between the carriages is thus greater.

In the embodiment of figure 4 the carriage could also be fixedly connected to accessory 13, and pin 22 can be provided such that the accessory can still move upward relative to base body 11 when pin 22 is mounted. Pin 22 then serves only to determine the lowermost position of accessory 13 relative to base body 11.

Pin 22 is preferably provided on one side with a hook which can also engage in an opening of base body 11. Two openings are for this purpose shown in each case in figure 4. Having pin 22 engage with the hook in a further opening prevents rotation of pin 22. The pin can further have a small hole at its distal end for the purpose of securing the pin via a small pin or securing element.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

### Key to the figures

- 1.: Loading space
- 2.: Load container
- 3.: Tarpaulin
- 4.: Lower support beam
- 5.: Upper support beam
- 6.: Upright supporting beam
- 7.: Lower carriage
- 8.: Upper carriage
- 9.: Longitudinal direction
- 10.: Door
- 11.: Base body
- 12.: Frame lower carriage
- 13.: Accessory
- 14.: Guide housing
- 15.: Guide
- 16.: Frame upper carriage
- 17.: Stop
- 18.: First predetermined minimum distance
- 19.: Second predetermined minimum distance
- 20.: Protrusion
- 21.: Slot
- 22.: Pin
- 23.: Upper opening
- 24.: Lower opening
- 25.: Recess
- 26.: Connecting elements

## Claims

1. Supporting beam (6) for a system for attaching a tarpaulin (3) for the purpose of closing a side of a loading space (1), which supporting beam (6) is provided to extend in the system between an upper support beam (5) and a lower support beam (4), and wherein the supporting beam (6) comprises on an upper side an upper carriage (8) which is compatible with an upper rail of the upper support beam (5), and comprises on an underside a lower carriage (7) which is compatible with a lower rail of the lower support beam (4), wherein the supporting beam (6) is provided to hold the lower carriage (7) at a first predetermined minimum distance (18) relative to the upper carriage (8) in a first mode of use, this minimum distance being related to the height of the loading space (1), **characterized in that** the supporting beam (6) has a second mode of use for holding the lower carriage (7) at a second predetermined minimum distance (19) relative to the upper carriage (8), wherein the second predetermined minimum distance (19) is greater than the first predetermined minimum distance (18), wherein the supporting beam (6) comprises a guide housing (14) on an upper side and wherein the upper carriage (8) is connected to a guide (15) which is compatible with the guide housing, so that the upper carriage (8) is movable in a longitudinal direction of the supporting beam (6) in the first mode of use and in the second mode of use of the supporting beam (6) in order to increase the distance between the lower and the upper carriage (8).

2. Supporting beam (6) according to claim 1, wherein the supporting beam (6) is provided with a stop (17) for the upper carriage (8), wherein the position of the stop relative to the supporting beam (6) determines the minimum distance between the lower and the upper carriage (8) in the first and in the second mode of use of the supporting beam (6).

3. Supporting beam (6) according to any of the foregoing claims, wherein the supporting beam (6) comprises a base body (11) and an accessory (13), which accessory is compatible with the base body (11) for being connected at at least two positions to the base body (11) so that the mode of use of the supporting beam (6) is determined by the position of the accessory.

4. Supporting beam (6) according to claim 3, wherein the accessory and the base body (11) comprise connecting means which are compatible in order to connect the accessory to the base body (11) in a manner such that a predetermined displacement of the accessory relative to the base body (11) can be performed.

5. Supporting beam (6) according to claim 4, wherein the connecting means are formed by one or more protrusions and corresponding slots (21), wherein the protrusions engage in the slots (21) in order to realize the connection while the protrusions are movable inside the slots (21) so that the predetermined displacement can be performed.

6. Supporting beam (6) according to claim 5, wherein the slots (21) extend in a direction substantially equal to the longitudinal direction of the supporting beam (6) so that the accessory is displaceable relative to the base body (11) in the longitudinal direction of the supporting beam (6).

7. Supporting beam (6) according to any of the claims 4-6, wherein the accessory and the base body (11) comprise locking means which are compatible for the purpose of locking the accessory relative to the base body (11) at two different positions of the accessory relative to the base body (11).

8. Supporting beam (6) according to claim 6, wherein the locking means are formed by one or more pins and two sets of corresponding openings, wherein the pins are provided to engage in the corresponding openings of each of the two sets so as to lock the accessory relative to the base body (11) in each of the two respective positions.

9. Supporting beam (6) according to any of the claims 3-8 and claim 2, wherein the accessory is provided with the stop.

10. Supporting beam (6) according to any of the claims 3-9, wherein the base body (11) is provided with the guide housing.

11. Supporting beam (6) according to any of the foregoing claims and claim 3, wherein the accessory extends at the position of an upper segment of the supporting beam (6), this upper segment forming at least 10%, preferably at least 15%, more preferably at least 20% of the length of the supporting beam (6) in the first mode of use.

12. System for attaching a tarpaulin (3) for the purpose of closing a side of a loading space (1), the system comprising an upper support beam (5) and a lower support beam (4) and comprising at least two supporting beams (6) according to any of the foregoing claims which extend between the upper and lower support beam (4).

13. Loading space (1) with a side which can be closed via a tarpaulin (3) which is attached by means of a system according to claim 12.

## Patentansprüche

1. Tragholm (6) für ein System zum Anbringen einer Abdeckplane (3) zum Zwecke des Verschließens einer Seite von einem Laderaum (1), wobei der Tragholm (6) vorgesehen ist, um sich in dem System zwischen einem oberen Tragholm (5) und einem unteren Tragholm (4) zu erstrecken, und wobei der Tragholm (6) auf einer oberen Seite einen oberen Wagen (8) umfasst, welcher mit einer oberen Schiene von dem oberen Tragholm (5) kompatibel ist, und auf einer unteren Seite einen unteren Wagen (7) umfasst, welcher mit einer unteren Schiene von dem unteren Tragholm (4) kompatibel ist, wobei der Tragholm (6) vorgesehen ist, um den unteren Wagen (7) an einem ersten vorbestimmten minimalen Abstand (18) relativ zu dem oberen Wagen (8) in einem ersten Betriebsmodus zu halten, wobei dieser minimale Abstand mit der Höhe des Laderaums (1) in Zusammenhang steht, **dadurch gekennzeichnet, dass** der Tragholm (6) einen zweiten Betriebsmodus zum Halten des unteren Wagens (7) an einem zweiten vorbestimmten minimalen Abstand (19) relativ zu dem oberen Wagen (8) aufweist, wobei der zweite vorbestimmte minimale Abstand (19) größer ist als der erste vorbestimmte minimale Abstand (18), wobei der Tragholm (6) ein Führungsgehäuse (14) auf einer oberen Seite umfasst, und wobei der obere Wagen (8) mit einer Führung (15) verbunden ist, welche mit dem Führungsgehäuse kompatibel ist, so dass der obere Wagen (8) in einer longitudinalen Richtung des Tragholms (6) in dem ersten Betriebsmodus und in dem zweiten Betriebsmodus bewegbar ist, um den Abstand zwischen dem unteren und dem oberen Wagen (8) zu vergrößern.

2. Tragholm (6) gemäß Anspruch 1, wobei der Tragholm (6) mit einem Anschlag (17) für den oberen Wagen (8) versehen ist, wobei die Position des Anschlags relativ zu dem Tragholm (6) den minimalen Abstand zwischen dem unteren und dem oberen Wagen (8) in dem ersten und in dem zweiten Betriebsmodus des Tragholms (6) bestimmt.

3. Tragholm (6) gemäß irgendeinem der vorhergehenden Ansprüche, wobei der Tragholm (6) einen Basiskörper (11) und ein Zubehörteil (13) umfasst, wobei das Zubehörteil mit dem Basiskörper (11) kompatibel ist, um an zumindest zwei Positionen mit dem Basiskörper (11) verbunden zu werden, so dass der Betriebsmodus des Tragholms (6) durch die Position des Zubehörteils bestimmt wird.

4. Tragholm (6) gemäß Anspruch 3, wobei das Zubehörteil und der Basiskörper (11) Verbindungsmittel umfassen, welche kompatibel sind, um das Zubehörteil mit dem Basiskörper (11) zu verbinden, auf solch eine Weise, dass ein vorbestimmter Versatz des Zubehörteils relativ zu dem Basiskörper (11) durchgeführt werden kann.

5. Tragholm (6) gemäß Anspruch 4, wobei die Verbindungsmittel durch einen oder mehrere Vorsprünge und entsprechende Schlitze (21) gebildet werden, wobei die Vorsprünge in die Schlitze (21) eingreifen, um die Verbindung zu realisieren, während die Vorsprünge im Inneren der Schlitze (21) bewegbar sind, so dass der vorbestimmte Versatz durchgeführt werden kann.

6. Tragholm (6) gemäß Anspruch 5, wobei die Schlitze (21) sich in einer Richtung erstrecken, welche im Wesentlichen gleich zu der longitudinalen Richtung des Tragholms (6) ist, so dass das Zubehörteil relativ zu dem Basiskörper (11) in der longitudinalen Richtung des Tragholms (6) verschiebbar ist.

7. Tragholm (6) gemäß irgendeinem der Ansprüche 4 - 6, wobei das Zubehörteil und der Basiskörper (11) Sperrmittel umfassen, welche zum Zwecke des Verriegelns des Zubehörteils relativ zu dem Basiskörper (11) an zwei unterschiedlichen Positionen von dem Zubehörteil relativ zu dem Basiskörper (11) kompatibel sind.

8. Tragholm (6) gemäß Anspruch 6, wobei die Sperrmittel durch einen oder mehrere Stifte und zwei Sätze von entsprechenden Öffnungen gebildet werden, wobei die Stifte vorgesehen sind, um in die entsprechenden Öffnungen von jedem von den zwei Sätzen einzugreifen, um das Zubehörteil relativ zu dem Basiskörper (11) in jeder von den zwei jeweiligen Positionen zu verriegeln.

9. Tragholm (6) gemäß irgendeinem der Ansprüche 3 - 8 und Anspruch 2, wobei das Zubehörteil mit dem Anschlag versehen ist.

10. Tragholm (6) gemäß irgendeinem der Ansprüche 3 - 9, wobei der Basiskörper (11) mit dem Führungsgehäuse versehen ist.

11. Tragholm (6) gemäß irgendeinem der vorhergehenden Ansprüche und Anspruch 3, wobei sich das Zubehörteil an der Position von einem oberen Segment des Tragholms (6) erstreckt, wobei dieses obere Segment zumindest 10 %, vorzugsweise zumindest 15 %, noch bevorzugter zumindest 20 % von der Länge des Tragholms (6) in dem ersten Betriebsmodus bildet.

12. System zum Anbringen einer Abdeckplane (3) zum Zwecke des Verschließens einer Seite von einem Laderaum (1), wobei das System einen oberen Tragholm (5) und einen unteren Tragholm (4) umfasst, und zumindest zwei Tragholme (6) gemäß irgendeinem der vorhergehenden Ansprüche, welche sich zwischen dem oberen und unteren Tragholm (4) erstrecken.

13. Laderaum (1) mit einer Seite, welche über eine Abdeckplane (3) verschlossen werden kann, welche mittels eines Systems gemäß Anspruch 12 angebracht ist.

## Revendications

1. Poutre porteuse (6) pour un système permettant de fixer une bâche (3) dans le but de fermer un côté d'un espace de chargement (1), laquelle poutre porteuse (6) est prévue pour s'étendre dans le système entre une poutre de support supérieure (5) et une poutre de support inférieure (4), et dans laquelle la poutre porteuse (6) comprend sur un côté supérieur un chariot supérieur (8) qui est compatible avec un rail supérieur de la poutre de support supérieure (5), et comprend sur un côté inférieur un chariot inférieur (7) qui est compatible avec un rail inférieur de la poutre de support inférieure (4), dans laquelle la poutre porteuse (6) est prévue pour retenir le chariot inférieur (7) à une première distance minimale prédéterminée (18) par rapport au chariot supérieur (8) dans un premier mode d'utilisation, cette distance minimale étant relative à la hauteur de l'espace de chargement (1), **caractérisée en ce que** la poutre porteuse (6) a un second mode d'utilisation permettant de retenir le chariot inférieur (7) à une seconde distance minimale prédéterminée (19) par rapport au chariot supérieur (8), dans laquelle la seconde distance minimale prédéterminée (19) est supérieure à la première distance minimale prédéterminée (18), dans laquelle la poutre porteuse (6) comprend un logement de guide (14) sur un côté supérieur et dans laquelle le chariot supérieur (8) est relié à un guide (15) qui est compatible avec le logement de guide, de sorte que le chariot supérieur (8) soit mobile dans une direction longitudinale de la poutre porteuse (6) dans le premier mode d'utilisation et dans le second mode d'utilisation de la poutre porteuse (6) afin d'augmenter la distance entre les chariots inférieur et supérieur (8).

2. Poutre porteuse (6) selon la revendication 1, dans laquelle la poutre porteuse (6) est pourvue d'une butée (17) pour le chariot supérieur (8), dans laquelle la position de la butée par rapport à la poutre porteuse (6) détermine la distance minimale entre les chariots inférieur et supérieur (8) dans le premier et dans le second mode d'utilisation de la poutre porteuse (6).

3. Poutre porteuse (6) selon l'une quelconque des revendications précitées, dans laquelle la poutre porteuse (6) comprend un corps de base (11) et un accessoire (13), lequel accessoire est compatible avec le corps de base (11) pour être relié au niveau d'au moins deux positions au corps de base (11) de sorte que le mode d'utilisation de la poutre porteuse (6) soit déterminé par la position de l'accessoire.

4. Poutre porteuse (6) selon la revendication 3, dans laquelle l'accessoire et le corps de base (11) comprennent des moyens de liaison qui sont compatibles afin de relier l'accessoire au corps de base (11) de manière à ce qu'un déplacement prédéterminé de l'accessoire par rapport au corps de base (11) puisse être effectué.

5. Poutre porteuse (6) selon la revendication 4, dans laquelle les moyens de liaison sont constitués par une ou plusieurs saillies et de rainures (21) correspondantes, dans laquelle les saillies s'engagent dans les rainures (21) afin de réaliser la liaison pendant que les saillies sont mobiles à l'intérieur des rainures (21) de sorte que le déplacement prédéterminé puisse être effectué.

6. Poutre porteuse (6) selon la revendication 5, dans laquelle les rainures (21) s'étendent dans une direction sensiblement égale à la direction longitudinale de la poutre porteuse (6) de sorte que l'accessoire puisse être déplacé par rapport au corps de base (11) dans la direction longitudinale de la poutre porteuse (6).

7. Poutre porteuse (6) selon l'une quelconque des revendications 4 à 6, dans laquelle l'accessoire et le corps de base (11) comprennent des moyens de blocage qui sont compatibles dans le but de bloquer l'accessoire par rapport au corps de base (11) au niveau de deux positions différentes de l'accessoire par rapport au corps de base (11).

8. Poutre porteuse (6) selon la revendication 6, dans laquelle les moyens de blocage sont constitués par une ou plusieurs goupilles et deux ensembles d'ouvertures correspondantes, dans laquelle les goupilles sont prévues pour s'engager dans les ouvertures correspondantes de chacun des deux ensembles de façon à bloquer l'accessoire par rapport au corps de base (11) dans chacune des deux positions respectives.

9. Poutre porteuse (6) selon l'une quelconque des revendications 3 à 8 et la revendication 2, dans laquelle l'accessoire est pourvu de la butée.

10. Poutre porteuse (6) selon l'une quelconque des revendications 3 à 9, dans laquelle le corps de base (11) est pourvu du logement de guide.

11. Poutre porteuse (6) selon l'une quelconque des revendications précitées et la revendication 3, dans laquelle l'accessoire s'étend au niveau de la position d'un segment supérieur de la poutre porteuse (6), ce segment supérieur représentant au moins 10 %, de préférence au moins 15 %, de manière davantage préférée au moins 20 % de la longueur de la poutre porteuse (6) dans le premier mode d'utilisation.

12. Système permettant de fixer une bâche (3) dans le but de fermer un côté d'un espace de chargement (1), le système comprenant une poutre de support supérieure (5) et une poutre de support inférieure (4) et comprenant au moins deux poutres porteuses (6) selon l'une quelconque des revendications précitées qui s'étendent entre les poutres de support supérieure et inférieure (4).

13. Espace de chargement (1) avec un côté qui peut être fermé via une bâche (3) qui est fixée au moyen d'un système selon la revendication 12.
